# EUROPEAN PATENT APPLICATION

(11) **EP 4 826 535 A1**
(43) Date of publication of application: **21.10.2026**
(21) Application number: 24918414.4
(22) Date of filing: 19.12.2024
(51) Int. Cl.: G06F 9/50, G06N 3/098

(54) **MODEL SEGMENTATION**

(30) Priority: 19.01.2024 CN 202410081475
(71) Applicant: Cloud Intelligence Assets Holding (Singapore) Private Limited, Singapore 189554 (SG)
(72) Inventor: WANG, Nan, Shanghai 200030 (CN); ZI, Yanyi, Shanghai 200030 (CN); ZHOU, Peng, Sunnyvale, California 94085 (US); PANG, Zhangdeng, Shanghai 200030 (CN)
(74) Representative: 2SPL Patentanwälte PartG mbB
(86) International application number: PCT/IB2024/062856
(87) International publication number: WO 2025/153881

(57) **Abstract**

The present application provides a model segmentation method, a device and a storage medium. Segmentation parameters in different segmentation dimensions can be generated for a target model, and the generated segmentation parameters are filtered according to preset filtering rules, such that the remaining segmentation parameters in the segmentation dimensions are significantly reduced, and thus the number of segmentation strategies generated by means of combining the remaining segmentation parameters can also be significantly reduced. Candidate segmentation strategies that meet verification conditions are searched for among the segmentation strategies obtained by means of combination. After multi-level filtering operations, low-quality segmentation strategies can be rationally discarded, thereby making the number of retained candidate segmentation strategies more streamlined. The performance of the target model under each candidate segmentation strategy is evaluated, such that an appropriate target segmentation strategy can be finally determined to serve as the basis for distributed deployment of the target model.

## Description

### TECHNICAL FIELD

This disclosure relates to the field of artificial intelligence technologies, and in particular, to model partitioning.

### BACKGROUND

With the development of a large language model (LLM), a scale of the large language model continuously increases, thereby creating a growing demand for distributed computing. A computing cluster configured to carry the large language model generally needs to include thousands of GPUs, to support a distributed training process and a distributed inference process of the large language model.

In a distributed deployment process, selection of partitioning parameters is of great significance, which may affect performance of the training process or the inference process. Currently, the partitioning parameters need to be determined by an algorithm engineer according to experience, which takes time and effort, and also may cause a poor partitioning effect due to an improper partitioning parameter, affecting model performance.

### SUMMARY

A plurality of aspects of this disclosure provide a model partitioning method, a device, and a storage medium, to optimize a model partitioning effect.

Embodiments of this disclosure provide a model partitioning method. The method includes: performing filtering on partitioning parameters corresponding to a target model in each of partitioning dimensions according to a preset filtering rule in the corresponding partition dimension; combining the partitioning parameters, remained after the filtering, in the partitioning dimensions to form partitioning policies, and searching for candidate partitioning policies meeting a check condition from the formed partitioning policies; and performing performance evaluation on the target model under each of the candidate partitioning policies, to determine a target partitioning policy as a basis for distributed deployment of the target model.

In some embodiments, the method may further include: obtaining model parameters corresponding to the target model; querying hardware information corresponding to a target cluster, where the target cluster is configured to carry the target model; and generating the partitioning parameters for the target model in each of the partitioning dimensions based on the model parameters and the hardware information.

In some embodiments, the partitioning dimensions include a tensor parallel dimension, a partitioning parameter in the tensor parallel dimension uses a tensor parallel size, and the preset filtering rule in the tensor parallel dimension includes at least one of: the tensor parallel size being 1 or an even number greater than 1 and not exceeding a total quantity of GPUs in a target cluster; the tensor parallel size being divisible by a total quantity of attention heads corresponding to the target model; or the tensor parallel size not exceeding a quantity of GPUs installed on a single node in the target cluster, where the target cluster is configured to carry the target model.

In some embodiments, the partitioning dimensions include a pipeline parallel dimension, a partitioning parameter in the pipeline parallel dimension uses a pipeline parallel size, and the preset filtering rule in the pipeline parallel dimension includes at least one of: the pipeline parallel size being 1 or an even number greater than 1 and not exceeding a total quantity of GPUs in a target cluster; or the pipeline parallel size being divisible by a total quantity of model layers corresponding to the target model, where the target cluster is configured to carry the target model.

In some embodiments, the partitioning dimensions include a data parallel dimension, a partitioning parameter in the data parallel dimension uses a data parallel size, and the preset filtering rule in the data parallel dimension includes: the data parallel size not exceeding a ratio of a total memory capacity of a target cluster to an amount of memory required by the target model; and/or the partitioning dimensions include a batch size dimension, a partitioning parameter in the batch size dimension uses a quantity of samples in a single batch, and the preset filtering rule in the batch size dimension includes: the quantity of samples in a single batch not exceeding an empirical value supported by the target cluster and not exceeding a quantity of samples supported by a remaining memory capacity, where the remaining memory capacity is an estimated amount of memory remained in the target cluster after the target model is deployed to the target cluster; where the target cluster is configured to carry the target model.

In some embodiments, each of the candidate partitioning policies includes a tensor parallel size, a pipeline parallel size, a data parallel size, and/or a quantity of samples in a single batch, and the searching for candidate partitioning policies meeting a check condition includes: determining that the check condition is met in response to a product of the tensor parallel size, the pipeline parallel size, and the data parallel size included in the candidate partitioning policy being equal to a total quantity of GPUs provided by a target cluster; and/or determining that the check condition is met in response to the data parallel size included in the candidate partitioning policy being divisible by the quantity of samples in the single batch, where the target cluster is configured to carry the target model.

In some embodiments, in response to N candidate partitioning policies being provided, the performing performance evaluation on the target model under each of the candidate partitioning policies, to determine the target partitioning policy includes: computing, under each of the N candidate partitioning policies, a simulated evaluation result corresponding to the target model on the target cluster; selecting K to-be-verified partitioning policies in the N candidate partitioning policies according to the simulated evaluation results, where K<N; performing distributed deployment of the target model on the target cluster according to the K to-be-verified partitioning policies, to generate real-machine evaluation results; and determining the target partitioning policy in the K to-be-verified partitioning policies according to the real-machine evaluation results.

In some embodiments, the computing, under each of the N candidate partitioning policies, the simulated evaluation result corresponding to the target model on the target cluster includes: simulating and evaluating a performance overhead corresponding to a backbone network of the target model on the target cluster under a first candidate partitioning policy as a simulated evaluation result corresponding to the target model under the first candidate partitioning policy, where the performance overhead includes a computing overhead, a communication overhead, and/or an memory overhead, and the first candidate partitioning policy is any one of the candidate partitioning policies.

In some embodiments, the simulating and evaluating the performance overhead corresponding to the backbone network of the target model on the target cluster includes: simulating and evaluating a unit performance overhead corresponding to a target process by using a unit sample received by a single model layer carried on a target process as a simulation and evaluation unit, where the target process is any process among simulated processes on the target cluster for carrying the target model; determining a simulation and evaluation coefficient corresponding to the target process according to partitioning parameters in the first candidate partitioning policy; computing a product of the simulation and evaluation coefficient and the unit performance overhead as a performance overhead corresponding to the target process; and estimating the performance overhead corresponding to the backbone network according to the performance overhead computed for the processes configured to carry the backbone network.

In some embodiments, the simulating and evaluating the unit performance overhead corresponding to the target process includes: simulating and evaluating, for an inference stage, a performance overhead corresponding to the unit sample in a single round of end-to-end propagation as the unit performance overhead corresponding to the target process; and simulating and evaluating, for a training stage, a total performance overhead corresponding to the unit sample in a plurality of rounds of end-to-end propagation required for training and other training-required links as the unit performance overhead corresponding to the target process.

In some embodiments, the estimating the performance overhead corresponding to the backbone network according to the performance overheads computed for the processes configured to carry the backbone network includes: selecting a representative process according to time consumption included in the performance overheads corresponding to the processes; and using the performance overhead corresponding to the representative process as the performance overhead corresponding to the backbone network.

In some embodiments, the selecting K to-be-verified partitioning policies in the N candidate partitioning policies according to a simulated evaluation result includes: filtering out, in the N candidate partitioning policies according to memory overheads in the simulated evaluation results, a candidate partitioning policy estimated to have a memory overflow problem; computing, based on the simulated evaluation results, an evaluation indexes respectively corresponding to remaining candidate partitioning policies; and sorting the remaining candidate partitioning policies according to the evaluation indexes, to select the K to-be-verified partitioning policies, where the evaluation index includes a sampling rate.

In some embodiments, the performing distributed deployment of the target model on the target cluster according to the K to-be-verified partitioning policies, to generate the real-machine evaluation results includes: invoking a model execution framework, and inputting partitioning parameters in each of the K to-be-verified partitioning policies into the model execution framework; performing a respective distributed deployment of the target model on the target cluster according to each of the K to-be-verified partitioning policies by using the model execution framework; and performing a real-machine evaluation operation under each of the K to-be-verified partitioning policies, to generate the real-machine evaluation results.

In some embodiments, the method further includes: extracting, from the invoked model execution framework, a configuration file generated when performing the distributed deployment of the target model on the target cluster according to the target partitioning policy; and saving the configuration file.

The embodiments of this disclosure further provide a computing device, including a memory, a processor, and a communication component, where the memory is configured to store one or more computer instructions; and the processor is coupled to the memory and the communication component, and is configured to execute the one or more computer instructions, to perform the foregoing model partitioning method.

The embodiments of this disclosure further provide a computer-readable storage medium, storing computer instructions, where the computer instructions, when executed by one or more processors, cause the one or more processors to perform the foregoing model partitioning method.

In the embodiments of this disclosure, before distributed deployment is performed on a target model, partitioning parameters in different partitioning dimensions may be generated for the target model, and filtering is performed on the generated partitioning parameters according to a preset filtering rule in the corresponding partition dimension. In this way, quantities of partitioning parameters in each of the partitioning dimensions may be effectively reduced, and a quantity of partitioning policies formed through combining the partitioning parameters remained after the filtering in the partitioning dimensions is also obviously reduced. In addition, candidate partitioning policies meeting a check condition are searched for from the formed partitioning policies. In this way, after a multi-layer filtering operation, low-quality partitioning policies may be properly discarded, so that a quantity of reserved candidate partitioning policies is more simplified. Based on this, performance evaluation may be performed on the target model under each of the candidate partitioning policies, to finally determine a proper target partitioning policy. Based on this, the proper target partitioning policy may be efficiently determined for the target model, and is used as a basis for distributed deployment of the target model without relying on manual experience, thereby effectively improving a model partitioning effect.

### BRIEF DESCRIPTION OF DRAWINGS

The accompanying drawings described herein are used for providing a further understanding of this disclosure, and constitute a part of this disclosure. Exemplary embodiments of this disclosure and descriptions thereof are used for explaining this disclosure, and do not constitute an improper limitation to this disclosure. The accompanying drawings are as follows.
FIG. 1 is a schematic flowchart of a model partitioning method according to an exemplary embodiment of this disclosure.
FIG. 2 is a schematic logic diagram of a model partitioning method according to an exemplary embodiment of this disclosure.
FIG. 3 is a schematic flowchart of another model partitioning method according to an exemplary embodiment of this disclosure.
FIG. 4 is a schematic diagram of a model partitioning principle according to an exemplary embodiment of this disclosure.
FIG. 5 is a schematic structural diagram of a computing device according to another embodiment of this disclosure.

### DETAILED DESCRIPTION

To make objectives, technical solutions, and advantages of this disclosure clearer, technical solutions of this disclosure are clearly and completely described below with reference to specific embodiments of this disclosure and corresponding accompanying drawings. Obviously, the described embodiments are only part of the embodiments of this disclosure, rather than all the embodiments. Based on the embodiments in this disclosure, all other embodiments obtained by a person of ordinary skill in the art without creative work shall fall within the protection scope of this disclosure.

Before technical solutions provided in the embodiments of this disclosure begin to be described in detail, several technical concepts involved in this disclosure are briefly explained below.

Large model: it may be a deep learning model having a large-scale model parameter, and may generally include hundreds of millions, tens of billions, hundreds of billions, trillions, or even more than ten trillion model parameters. The large model may alternatively be referred to as a foundation model. The large model is pre-trained by using large-scale unlabeled corpora, to obtain a pre-training model with more than a hundred million parameters. Such a model can adapt to a wide range of downstream tasks, has a relatively good generalization capability, and includes, for example, a large language model (LLM) or a multi-modal pre-training model. It should be noted that during actual application of the large model, the pre-training model may be fine-tuned by using a small quantity of samples, so that the large model may be applied to different tasks. For example, the large model may be widely applied to fields such as natural language processing (NLP), computer vision, and speech processing, may be specifically applied to a computer vision field task like visual question answering (VQA), image caption (IC), or image generation, or may be widely applied to a natural language processing field task like text-based sentiment classification, text abstract generation, or machine translation.

Distributed deployment: it may be understood as that after a model is partitioned, the partitioned model parts are carried by a computing cluster. A typical cluster for distributed deployment is a GPU cluster. After distributed deployment is completed, when an inference or training task is received, the task may be divided into parallel subtasks, to process the task in a distributed manner, thereby improving task processing efficiency.

Model execution framework: it may be understood as a tool configured to deploy and execute a model. The model execution framework generally includes a distributed initialization section. In this section, the model execution framework partitions the model according to input partitioning parameters, and then distributively deploys the partitioned models to parallel processes in a cluster. Currently, there are many model execution frameworks, for example, Megatron, in the field, and no more product examples are provided herein.

As described in the background technology, currently, partitioning parameters need to be input to the model execution framework by a professional person like an algorithm engineer according to experience, and the model execution framework partitions the model according to the input partitioning parameters and perform distributed deployment of the model. However, such a model partitioning manner relying on manual experience results in an unsatisfactory model partitioning effect, and causes poor model performance and excessively high model training/inference costs.

In view of this, an embodiment of this disclosure provides an innovative model partitioning method, to automatically determine a proper partitioning policy for a model before distributed deployment is performed on the model, and use the policy as a basis for distributed deployment performed by a model execution framework without relying on manual experience.

The following describes the technical solutions provided in the embodiments of this disclosure in detail with reference to the accompanying drawings.

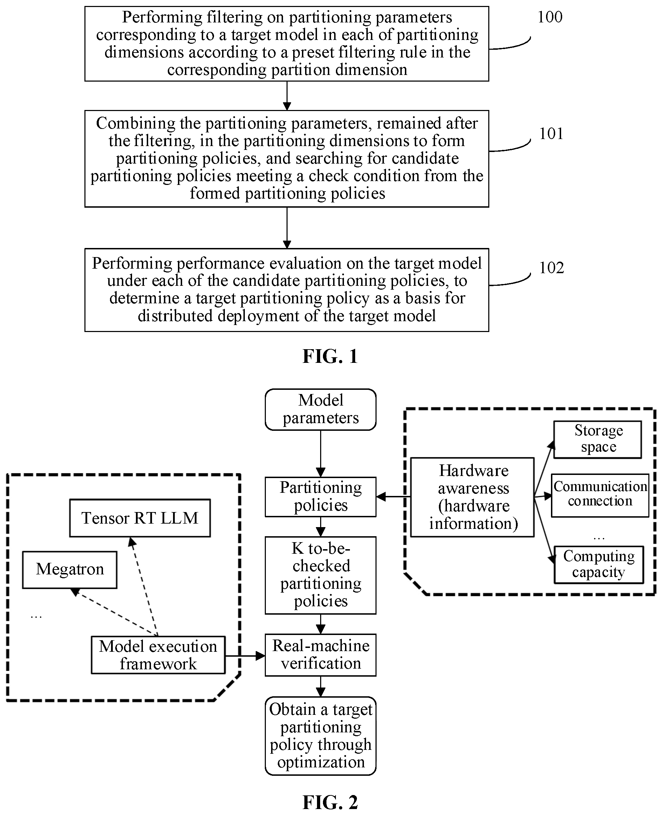

FIG. 1 is a schematic flowchart of a model partitioning method according to an exemplary embodiment of this disclosure. The method may be performed by a data processing apparatus, the data processing apparatus may be implemented as software, hardware, or a combination of software and hardware, and the data processing apparatus may be integrated in a computing device. Referring to FIG. 1, the method may include step 100 to step 102.

Step 100: perform filtering on partitioning parameters corresponding to a target model in each of partitioning dimensions according to a preset filtering rule in the corresponding partition dimension.

Step 101: combine the partitioning parameters, remained after the filtering, in the partitioning dimensions to form partitioning policies, and Search for candidate partitioning policies meeting a check condition from the formed partitioning policies.

Step 102: perform performance evaluation on the target model under each of the candidate partitioning policies, to determine a target partitioning policy as a basis for distributed deployment of the target model.

The target model in this embodiment may be the large model mentioned above, or certainly may be another model on which the distributed deployment needs to be performed. Attributes such as a scale and a function of the target model are not limited in this embodiment.

Referring to FIG 1, in step 100, the partitioning parameters corresponding to each of the partitioning dimensions may be generated for the target model. In this embodiment, the target model may be partitioned in a hybrid parallel manner. Therefore, there may be a plurality of partitioning dimensions in this embodiment. The partitioning dimensions in this embodiment may include, but are not limited to, a tensor parallel dimension, a pipeline parallel dimension, a data parallel dimension, a batch size dimension, and the like. In this embodiment, partitioning parameters used in different partitioning dimensions may be as follows. The partitioning parameter in the tensor parallel dimension uses a tensor parallel size, the partitioning parameter in the pipeline parallel dimension uses a pipeline parallel size, the partitioning parameter in the data parallel dimension uses a data parallel size, and the partitioning parameter in the batch size dimension uses a quantity of samples in the single batch. The foregoing several exemplary partitioning dimensions are explained and described as follows.

The tensor parallel (TP) dimension may be understood as partitioning a single model layer of a model, and separately deploying the partitioned model layer to different processes, where the processes run on nodes in a cluster.

The pipeline parallel (PP) dimension may be understood as partitioning a plurality of model layers of a model into a plurality of groups of model layers, and different groups are deployed to different processes.

The data parallel (DP) dimension may be understood as that a plurality of processes carrying a same part of the model process a same piece of data in parallel.

A batch size (BS) dimension may be understood as a quantity of samples included in a single batch input into the model. When BSs are different, amounts of computation required by parallel processes are different.

It should be understood that the foregoing several partitioning dimensions are merely exemplary, and are not limited in this embodiment.

In this embodiment, a plurality of implementations may be used for generating, for the target model, the partitioning parameters corresponding to each of the partitioning dimensions. FIG. 2 is a schematic logic diagram of a model partitioning method according to an exemplary embodiment of this disclosure. Referring to FIG. 2, in a implementation: model parameters corresponding to the target model may be obtained; hardware information corresponding to a target cluster is queried, where the target cluster is configured to carry the target model; and the partitioning parameters in each of the partitioning dimensions are generated for the target model based on the model parameters and the hardware information.

In the implementation, the model parameters of the target model may be input by a user. The model parameters in this embodiment may include, but are not limited to, a quantity of model layers, a hidden variable dimension, a quantity of attention heads, a dimension of each head, a vocabulary size, a data type, a sequence length, a maximum BS, and the like. It should be understood that these model parameters are merely exemplary, and are not limited thereto in this embodiment, which are not enumerated herein.

Referring to FIG. 2, in the implementation, the hardware information corresponding to the target cluster may be obtained in a hardware awareness manner. A dimension of hardware awareness may include, but is not limited to, a storage space, a communication connection and computing capability, and the like. During actual application, a management and control program is generally deployed on the target cluster. Based on this, the hardware information of the target cluster may be automatically monitored in real time by using the management and control program on the target cluster. In the implementation, the hardware information of the target cluster may be queried from the management and control program on the target cluster. The hardware information corresponding to the target cluster is obtained in the hardware awareness manner, so that accuracy of the hardware information can be effectively improved, thereby more accurately computing relevant partitioning parameters for the target model. The hardware information in this embodiment may include, but is not limited to, a hardware type, a topology structure, a network communication bandwidth, a quantity of computing nodes, a quantity of GPU cards on a node, a graphics card memory, a computing capability, a communication bandwidth, and the like. It should be understood that the hardware information is merely exemplary, and is not limited thereto in this embodiment, which is not enumerated herein.

Based on this, the partitioning parameters in each of the partitioning dimensions may be generated for the target model according to the model parameters corresponding to the target model and the hardware information corresponding to the target cluster. In a research process, the inventor finds that under two limitations of the model parameters and the hardware information, a quantity of partitioning parameters that can be computed in each partitioning dimension is limited rather than infinite. Therefore, in this embodiment, all partitioning parameters that can be supported by the target cluster in each of the partitioning dimensions may be computed for the target model in an enumeration manner. In this embodiment, a computing rule in a process of enumerating the partitioning parameters according to the model parameters and the hardware information is not limited, and the computing rule may be designed according to a requirement. For example, if the target cluster includes eight GPUs, and a quantity of layers of the target model is 16, through enumeration, a tensor parallel size in a tensor parallel dimension may have such values: 1, 2, 3, 4, 5, 6, 7, and 8. Certainly, this is merely an exemplary computing rule, and this embodiment is not limited thereto.

It can be learned that the partitioning parameters generated for the target model in each of the partitioning dimensions according to the model parameters corresponding to the target model and the hardware information corresponding to the target cluster are very comprehensive.

In this embodiment, in step 100, it is further provided that, filtering is performed on the partitioning parameters corresponding to the target model in each of the partitioning dimensions according to the preset filtering rule in the corresponding partition dimension. In this embodiment, a proper preset filtering rule may be set to prune parameters of the target model in each partitioning dimension, to filter out improper partitioning parameters in each partitioning dimension.

In this embodiment, preset filtering rules may be respectively configured for different partitioning dimensions. When filtering is performed on partitioning parameters in a single partitioning dimension according to a corresponding preset filtering rule, partitioning parameters in other partitioning dimensions may be set to 1 by default, to avoid excessive filtering. The following separately provides several exemplary preset filtering rules for the several exemplary partitioning dimensions described above.

A preset filtering rule in the tensor parallel TP dimension may include at least one of, but is not limited to: the tensor parallel size being 1 or an even number greater than 1 and not exceeding a total quantity of GPUs in a target cluster; the tensor parallel size being divisible by a total quantity of attention heads corresponding to the target model; or the tensor parallel size not exceeding a quantity of GPUs installed on a single node in the target cluster.

For example, if the total quantity of GPUs that can be provided by the target cluster is 8, selected values of the tensor parallel size may include 1, 2, 4, 6, and 8, and other enumerated tensor parallel sizes are filtered out. If the total quantity of attention heads (included in the model parameters) in the target model is 32, because 6 cannot meet an integer division rule, the foregoing selected value 6 is filtered out, and remaining values of the tensor parallel size may include 1, 2, 4, and 8. If the quantity of GPUs installed on the single node in a target cluster is 4, because 8 is greater than 4, 8 is filtered out. Selection in this aspect may effectively ensure that tensor parallel processes does not cross nodes, avoiding cross-node data transmission between tensor parallel processes. So far, the remaining values of the tensor parallel size may include 1, 2, and 4.

A preset filtering rule in the pipeline parallel PP dimension includes at least one of, but is not limited to: the pipeline parallel size being 1 or an even number greater than 1 and not exceeding a total quantity of GPUs in the target cluster; or the pipeline parallel size being divisible by a total quantity of model layers corresponding to the target model.

For example, if the total quantity of model layers of the target model is 32, selected values of the pipeline parallel size may include 1, 2, 4, and 8, and other enumerated pipeline parallel sizes are filtered out. Based on selection in this aspect, quantities of model layers carried in pipeline parallel processes may be consistent, so that workloads among the processes are more balanced.

A preset filtering rule in the data parallel DP dimension may include: the data parallel size not exceeding a ratio of a total memory capacity of a target cluster to an amount of memory required by the target model.

For example, if the amount of memory required by the target model is 26 GB, the target cluster provides 8 GPUs, and an memory capacity of each GPU is 14 GB, a total memory capacity of the target cluster is that 14*8=112 GB. Because 112/26≥4, the data parallel size may be selected to have values including 1, 2, 3, and 4. In other words, a maximum of four target models are deployed to the target cluster.

A preset filtering rule in the batch size BS dimension may include: the quantity of samples in the single batch not exceeding an empirical value supported by the target cluster and not exceeding a quantity of samples supported by a remaining memory capacity, and the remaining memory capacity is an estimated amount of memory remained in the target cluster after the target model is deployed to the target cluster.

For example, if the GPU model in the target cluster is A10, it may be determined, according to experience, that an empirical value of BS that may be supported by the target cluster is 512. If the GPU model in the target cluster is A20, and a computing power of A20 is twice a computing power of A10, it may be determined that an empirical value of BS that may be supported by the target cluster is 1024. Continuing from the previous example, a total memory capacity of the target cluster is 112 GB. Since the DP is set to 1 during filtering, a remaining memory capacity after the target model is deployed to the target cluster is that 112-26=84 GB. Through estimation, an amount of memory required by a single sample in the single batch is 32 MB. In this case, 84 GB/34 MB=2752 may be calculated. In this way, a smaller value, that is, 1024, may be selected in 2752 and 1024, and enumerated values of the BS exceeding 1024 are filtered out. In addition, in an enumeration process, a step size greater than 1 may be used for enumeration. For example, a step size 16 is used for enumeration, some values of the BS may also be filtered out.

It should be understood that the foregoing preset filtering rules are merely exemplary, this embodiment is not limited thereto, and no more examples are provided herein.

It may be understood that, in step 100, in this embodiment, by designing a proper filtering rule, one layer of filtering is boldly performed on the partitioning parameters in each partitioning dimension, and after the filtering operation, a quantity of remaining partitioning parameters of the target model in each partitioning dimension is relatively small. This reduces a quantity of candidate partitioning parameters, and also ensures accuracy of remaining partitioning parameters.

Based on this, still referring to FIG. 1, in step 101, the remaining partitioning parameters in the partitioning dimensions may be combined to form partitioning policies. As mentioned above, this embodiment supports performing model partitioning in the hybrid parallel manner. Therefore, combination herein may be understood as obtaining one partitioning parameter from each partitioning dimension to combine one partitioning policy. For example, if four partitioning dimensions are used, a partitioning policy obtained through combination in step 101 may be understood as a quadruple, and one partitioning parameter is respectively taken from each of four partitioning dimensions, to obtain four elements in the quadruple.

Based on the one layer of filtering operation in step 100, the remaining partitioning parameters in each partitioning dimension are relatively small. Therefore, in step 101, an enumeration manner may be adopted to enumerate all partitioning policies that can be combined from the remaining partitioning parameters in the partitioning dimensions.

In this embodiment, in step 101, it is further provided that, from the partitioning policies obtained through combination, a part of partitioning policies meeting the check condition are searched for, and the part of partitioning policies meeting the check condition are used as the candidate partitioning policies.

In an exemplary searching solution, it is determined that the check condition is met if a product of a tensor parallel size, a pipeline parallel size, and a data parallel size included in a candidate partitioning policy is equal to a total quantity of GPUs provided by the target cluster. This may ensure that all GPUs in the target cluster may be fully used.

In an embodiment, it is determined that the check condition is met if the data parallel size included in the candidate partitioning policy is divisible by a quantity of samples in a single batch. This may ensure that the quantity of samples in the single batch can be evenly allocated to a plurality of parallel model copies, so that workloads among processes are more balanced.

Exemplary check conditions in two aspects are provided in the exemplary searching solution. It should be noted that the check condition in this embodiment is not limited thereto.

It may be understood that, in this embodiment, in step 101, another layer of filtering is performed. After the filtering operation, various improper partitioning policies may be filtered out, and a quantity of remaining candidate partitioning policies is more simplified. This reduces the quantity of candidate partitioning policies, and also ensures accuracy of the candidate partitioning policies.

Then, in this embodiment, in step 102, performance evaluation is performed on the target model under each of the candidate partitioning policies, to determine the target partitioning policy as the basis for distributed deployment of the target model.

The performance evaluation may be understood as evaluating model performance that can be achieved when the target model is distributively deployed on the target cluster according to a candidate partitioning policy. During actual application, the optimal policy may be selected from the candidate partitioning policies based on performance evaluation results, to determine the target partitioning policy. In this way, when distributed deployment of the target model is subsequently performed according to the target partitioning policy, the model performance of the target model may be effectively ensured.

In conclusion, in this embodiment, before distributed deployment of the target model is performed, partitioning parameters in different partitioning dimensions may be generated for the target model, and filtering is performed on the generated partitioning parameters according to a preset filtering rule in the corresponding partition dimension. In this way, quantities of partitioning parameters in each of the partitioning dimensions are effectively reduced, and a quantity of partitioning policies formed through combining the remaining partitioning parameters in the partitioning dimensions is also obviously reduced. In addition, from the partitioning policies formed through combination, candidate partitioning policies meeting a check condition are searched for. In this way, after a multi-layer filtering operation, low-quality partitioning policies may be properly discarded, so that a quantity of reserved candidate partitioning policies is more simplified. Based on this, performance evaluation may be performed on the target model under each of the candidate partitioning policies, to finally determine a proper target partitioning policy. Based on this, the proper target partitioning policy is efficiently determined for the target model, and is used as a basis for distributed deployment of the target model without relying on manual experience, thereby effectively improving a model partitioning effect.

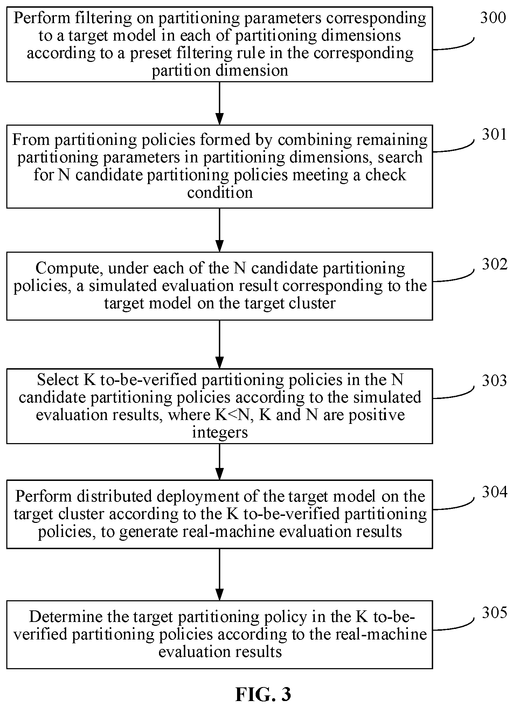

FIG. 3 is a schematic flowchart of another model partitioning method according to an exemplary embodiment of this disclosure. Referring to FIG. 3, the method may include step 300 to step 305.

Step 300: perform filtering on partitioning parameters corresponding to a target model in each of partitioning dimensions according to a preset filtering rule in the corresponding partition dimension.

Step 301: from partitioning policies formed by combining remaining partitioning parameters in partitioning dimensions, search for N candidate partitioning policies meeting a check condition.

Step 302: compute, under each of the N candidate partitioning policies, a simulated evaluation result corresponding to the target model on the target cluster.

Step 303: select K to-be-verified partitioning policies in the N candidate partitioning policies according to the simulated evaluation results, where K<N, K and N are positive integers.

Step 304: perform distributed deployment of the target model on the target cluster according to the K to-be-verified partitioning policies, to generate real-machine evaluation results.

Step 305: determine the target partitioning policy in the K to-be-verified partitioning policies according to the real-machine evaluation results.

For step 300 and step 301, referring to relevant descriptions in the foregoing embodiment, details are not described herein again. In this embodiment, an optional implementation of determining a target partitioning policy from the candidate partitioning policies may be provided based on step 302 to step 305.

Referring to FIG. 3, in step 302, performance simulation and evaluation may be separately performed for the target model on the target cluster under each of the N candidate partitioning policies, to obtain a corresponding simulated evaluation result. As mentioned above, in this embodiment, through the two layers of filtering performed in step 300 and step 301, a quantity of candidate partitioning policies is relatively small. Therefore, in step 302, performance simulation and evaluation only needs to be performed on the filtered candidate partitioning policies, and computing efficiency of a performance simulation and evaluation operation in step 302 is greatly improved.

It should be understood that the simulated evaluation result generated by the performance model evaluation operation performed in step 302 is a theoretical value. Although absolute accuracy cannot be achieved, the simulated evaluation results may basically reflect model partitioning effects that can be roughly achieved by different candidate partitioning policies. Therefore, in this embodiment, another layer of filtering is performed on the candidate partitioning policies by using the simulated evaluation results.

In addition, a specific implementation of the performance simulation and evaluation operation is not limited in this embodiment, and is exemplarily described below. Details are not described herein again.

However, in this embodiment, a final target partitioning policy is not directly determined based on the simulated evaluation result. Referring to FIG. 2, a mechanism in which theoretical searching is combined with real-machine verification for preference is innovatively provided.

According to this mechanism, in step 303, the K to-be-verified partitioning policies may be selected in the N candidate partitioning policies according to the simulated evaluation results.

In an exemplary selecting solution, first, filter out a candidate partitioning policy estimated to have a memory overflow problem in the N candidate partitioning policies according to a memory overhead in the simulated evaluation results; in a research process, the inventor finds that the simulated evaluation result generally includes an memory overhead. Therefore, this information is fully used in the exemplary filtering solution, to estimate and filter out a candidate partitioning policy in which a memory overflow problem exists. During an actual application, the memory overhead records an amount of memory required by a single batch of input, and hardware information includes an actual memory capacity. If the amount of memory required by the single batch of input exceeds a remaining memory capacity after the target model is simulated and deployed on the target cluster, it may be determined that the memory overflow problem exists. The essence herein is a layer of filtering. After the layer of filtering operation, some candidate partitioning policies having a defect may be filtered out.

Then, compute, based on the simulated evaluation result, evaluation indexes respectively corresponding to remaining candidate partitioning policies. In other words, only evaluation indexes corresponding to the remaining candidate partitioning policies in a previous section are needed. The evaluation index may include a sampling rate and the like. The sampling rate may be understood as a data amount that the target model can process per unit time. Exemplarily, an exemplary solution for computing the sampling rate may be: determining a quantity of samples in a single batch from a remaining candidate partitioning policy; determining, from a simulated evaluation result corresponding to the candidate partitioning policy, time consumption required by the target model to perform computing according to the quantity of samples; and using a ratio between the quantity of samples and the time consumption as the sampling rate. Certainly, in addition to the sampling rate, another type of evaluation index may alternatively be used, and this is not limited thereto.

Then, sort the remaining candidate partitioning policies according to the evaluation indexes, to select the K to-be-verified partitioning policies. Referring to FIG. 2, in an actual application, K candidate partitioning policies having highest evaluation indexes may be selected as to-be-verified partitioning policies.

After this layer of filtering, a quantity of remaining partitioning policies reaches K, which is very small.

Still referring to FIG.3, the following is provided in step 304. Perform distributed deployment of the target model on the target cluster according to the K to-be-verified partitioning policies, to generate real-machine evaluation results. It should be understood that, in step 304, a real-machine verification test is performed according to each to-be-verified partitioning policy. An exemplary real-machine evaluation solution may be: invoking a model execution framework, and inputting partitioning parameters in each of the K to-be-verified partitioning policies into the model execution framework; performing a respective distributed deployment of the target model on the target cluster according to each of the K to-be-verified partitioning policies by using the model execution framework; and performing a real-machine evaluation operation under each of the K to-be-verified partitioning policies, to generate the real-machine evaluation results.

In an actual application, a batch processing program may be used to invoke a specific model execution framework (such as Megatron or TensorRT), the foregoing distributed initialization step is completed for the target model on the target cluster according to each to-be-verified partitioning policy, and real-machine evaluation is performed. The invoked model execution framework may be preferably a model execution framework that may be used when the target model is subsequently deployed online. In addition, the inventor finds in a research process that, in a section of distributed initialization, the model execution framework further needs a large amount of internal processing logic based on input partitioning parameters, to complete distributed deployment. A configuration file is generated in this process. It is further provided in this embodiment that the configuration file may be extracted from the invoked model execution framework. In addition, after the target partitioning policy is determined, the configuration file corresponding to the target partitioning policy is saved. In this way, when the target model is deployed online in the future, the configuration file may be directly input to a corresponding model execution framework, which may avoid a large quantity of repeated work of the model execution framework in a distributed initialization section, thereby improving efficiency of the distributed initialization.

In this embodiment, when a real-machine evaluation operation is performed, an evaluation mechanism used may include but is not limited to: evaluating processing time corresponding to a fixed BS, or evaluating BS that can be supported by a fixed processing time. In addition, in this embodiment, the real-machine evaluation may employ evaluation indexes consistent with the evaluation indexes employed in the foregoing simulation and evaluation. For example, an evaluation index used during the real-machine evaluation may also be the sampling rate. Continuing from the exemplary evaluation index, the evaluating processing time corresponding to a fixed BS may be understood as: detecting a processing time consumed while the target model processes the fixed BS, calculating a ratio of the fixed BS to the consumed processing time, and using the ratio as a sampling rate of the target model. The evaluating BS that can be supported by a fixed processing time may be understood as: detecting a BS that is actually processed by the target model in the fixed processing time, computing a ratio of the BS to the fixed processing time, and using the ratio as the sampling rate of the target model. The essence of the two mechanisms is to compute a workload that the target model can process per unit time as a real-machine evaluation result of the target model.

In this way, in step 304, real-machine evaluation results corresponding to the target model in the K to-be-verified partitioning policies may be generated.

Based on this, referring to FIG. 2, in step 305, determine the target partitioning policy in the K to-be-verified partitioning policies according to the real-machine evaluation results. In an actual application, real-machine evaluation results generated by the K to-be-verified partitioning policies may be sorted, to find a target partitioning policy for preference.

In conclusion, in this embodiment, the final target partitioning policy is found for preference in the N candidate partitioning policies by using the mechanism in which the theoretical searching is combined with the real-machine verification for preference, rather than completely relying on theoretical deduction. In addition, in a process of the real-machine verification for preference, a model execution framework anticipated to be used when the target model is subsequently deployed online may further be used, and a configuration file that is accumulated when the model execution framework deploys the target model in real machine is stored, so that the model execution framework may directly use the configuration file during subsequent deployment online, and a large quantity of repeated work are avoided, thereby improving efficiency of deployment of the target model online.

A specific implementation solution of simulation and evaluation is not limited in the foregoing or following embodiments. An implementation solution is provided below. For ease of description, the first candidate partitioning policy in the foregoing N candidate partitioning policies is used as an example to describe the implementation solution. It should be understood that a same simulation and evaluation logic may be used for obtaining a corresponding simulated evaluation result in another candidate partitioning policy.

In this implementation solution, simulate and evaluate a performance overhead corresponding to a backbone network of the target model on the target cluster under a first candidate partitioning policy as a simulated evaluation result corresponding to the target model under the first candidate partitioning policy. In a research process, the inventor finds that a model may include a plurality of parts, such as a vectorization embedding part, a backbone network, and a prediction head. The performance overhead is most prominent in the backbone network. In view of this, in the implementation solution, during the simulation and evaluation, attention may be focused on a performance overhead corresponding to the backbone network of the target model, and the performance overhead is used as the simulated evaluation result corresponding to the target model under the first candidate partitioning policy.

Based on this, an exemplary solution of simulating and evaluating a performance overhead corresponding to the backbone network of the target model may be: simulating and evaluating a unit performance overhead corresponding to a target process by using a unit sample received by a single model layer carried on the target process as a simulation and evaluation unit, wherein the target process is any process among simulated processes on the target cluster for carrying the target model; determining a simulation and evaluation coefficient corresponding to the target process according to partitioning parameters in the first candidate partitioning policy; computing a product of the simulation and evaluation coefficient and the unit performance overhead as a performance overhead corresponding to the target process; and estimating a performance overhead corresponding to the backbone network according to the performance overheads computed for the processes configured to carry the backbone network.

First, in the exemplary simulation and evaluation solution, simulation partitioning is performed on the target model according to the first candidate partitioning policy, to generate a plurality of model parts, and parallel processes for carrying the target model on the target cluster are further simulated. It should be understood that a quantity of parallel processes simulated on the target cluster may be determined based on hardware information corresponding to the target cluster.

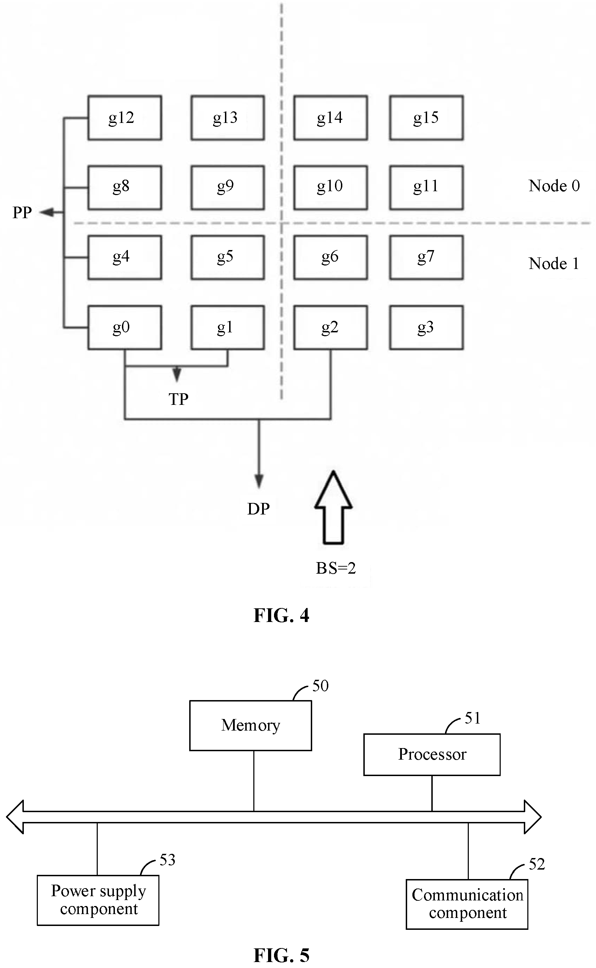

FIG. 4 is a schematic diagram of a model partitioning principle according to an exemplary embodiment of this disclosure. Referring to FIG. 4, for example, if two nodes exist in a target cluster, and 16 GPUs can be provided, one process (g0 to g15 in FIG. 4) may be started on each GPU. In any of the foregoing candidate partitioning policies in this embodiment, a total quantity of model parts that should be partitioned adapts to a quantity of parallel processes that can be provided in the target cluster. Therefore, when simulation partitioning is performed on a target model, 16 model parts may be obtained through simulation and partitioning. Certainly, parallel relationships among the 16 model parts obtained through partitioning are different under different candidate partitioning policies. A candidate partitioning policy corresponding to FIG. 4 is [TP=2, PP=4, DP=2, BS=2]. In this way, the 16 model parts obtained through partitioning are carried by the 16 processes.

In this way, from an overall perspective of the target model, the target model receives one batch of input. In FIG. 4, BS=2, and a single batch of input is distributed according to a plurality of partitioning dimensions, to distribute to each process. From a perspective of a process, in a case of the single batch of input, different processes may need to process different workloads. Therefore, different processes may require different performance overheads. In this exemplary simulation and evaluation solution, it is provided that a unit sample received by a single model layer carried on the target process is used as a simulation and evaluation unit, to simulate and evaluate a unit performance overhead required by the target process. It should be understood that a specific rule used in a process of simulating and evaluating the unit performance overhead is not limited herein. Because the unit performance overhead is affected by model parameters and hardware parameters, there has to be a natural affecting rule between the model parameters, the hardware parameters, and the unit performance overhead. In an actual application, this affecting rule may be extracted in a machine learning manner or a human summary manner, and is used as a rule in a simulation and evaluation process of the unit performance overhead. This affecting rule is not enumerated herein.

Then, in the exemplary simulation and evaluation solution, further determine a simulation and evaluation coefficient corresponding to the target process according to partitioning parameters in the first candidate partitioning policy. The simulation and evaluation coefficient is used for representing a multiple corresponding to a unit performance overhead required in the target process. The simulation and evaluation coefficient may generally be equal to (a quantity of model layers carried in the target process*BS)/DP. Specifically, it may be understood that, after one batch of samples (for example, BS=2) is input into the target model, the batch of samples is allocated once based on the DP (for example, DP=2). In this way, a BS allocated to each model layer changes to 1. If two model layers are carried in the target process, the BS allocated to the target process changes to 2. In this way, it may be computed that a simulation and evaluation coefficient of the target process is 2.

Then, in the exemplary simulation and evaluation solution, compute a product of the simulation and evaluation coefficient and the unit performance overhead as the performance overhead corresponding to the target process. Continuing from the foregoing example, the performance overhead corresponding to the target process is 2(the simulation and evaluation coefficient)*the unit performance overhead.

Finally, in the exemplary simulation and evaluation solution, estimate a performance overhead corresponding to the backbone network according to the performance overheads computed for the processes configured to carry the backbone network. During a research process, the inventor finds that because distributed computing is finally performed on the model, in this link, a representative process may be selected according to time consumption included in the performance overhead corresponding to each process. Use a performance overhead corresponding to the representative process as the performance overhead corresponding to the backbone network. In an actual application, a process consuming largest time may be selected as the representative process.

In this way, through the exemplary simulation and evaluation solution, a performance overhead corresponding to the backbone network of the target model on the target cluster may be obtained through simulation and evaluation.

In addition, during the research process, the inventor finds that a performance overhead required in a model inference stage and a performance overhead required in a model training stage are different. This is mainly due to different rounds of end-to-end propagation required in the inference stage and the training stage. In the inference stage, a single round of end-to-end propagation is generally performed to obtain a model output result. However, in the training stage, because two propagation directions exist, that is, forward propagation and backward propagation, a plurality of rounds of end-to-end propagation may be needed to complete one training. In view of this, in the exemplary simulation and evaluation solution, when simulation and evaluation is performed on the unit performance overhead corresponding to the target process, simulation and evaluation may be separately performed on the inference stage and the training stage.

Specifically, simulate and evaluate, for an inference stage, a performance overhead corresponding to the unit sample in a single round of end-to-end propagation as a unit performance overhead corresponding to the target process; and simulate and evaluate, for a training stage, a total performance overhead corresponding to the unit sample in a plurality of rounds of end-to-end propagation required for training and other training-required links as the unit performance overhead corresponding to the target process. In this way, a performance overhead respectively required by the target model in the inference stage and the training stage may be computed based on a unit performance overhead respectively obtained through simulation and evaluation for the inference stage and the training stage.

However, in a process of filtering the K to-be-verified partitioning policies described in the foregoing embodiment, the performance overheads obtained through simulation and evaluation in the inference stage and the training stage may be used as simulated evaluation results, to more properly select the K to-be-verified partitioning policies.

Further, various other events that may occur in the end-to-end propagation may be further simulated and computed, and time consumption caused by these events is simulated and is added to the foregoing unit performance overhead. These events that may occur may include, but are not limited to, a pipeline bubble event, preparatory work that a later process needs to perform for a previous process, and the like. The pipeline bubble event may be understood as that processes in pipeline parallel may wait for each other due to inconsistent work rhythms between preceding and succeeding processes. In this way, after the time consumption caused by these other events is simulated, accuracy of the unit performance overhead obtained through simulation and evaluation may be further improved, and accuracy of a performance overhead obtained through simulation and evaluation for the backbone network in the target model under the first candidate partitioning policy is further improved.

It should be understood that, in this embodiment, another exemplary solution may be used for simulating and evaluating the performance overhead corresponding to the backbone network of the target model on the target cluster. For example, a BS value that can be supported, a required amount of memory, a required traffic and communication overhead when time consumption of each process is fixed may be simulated and evaluated. This is not limited to the foregoing exemplary simulation and evaluation solution. No more detailed examples are provided herein.

In this embodiment, performance overheads concerned in the simulation and evaluation process may include, but are not limited to, a computing overhead, a communication overhead, and/or a memory overhead. The computing overhead and the communication overhead may be used as a basis for computing the evaluation index in the foregoing embodiment, and the memory overhead may be used as a basis for evaluating the foregoing memory overflow problem.

In conclusion, in this embodiment, the simulated evaluation result may be generated for the target model more accurately and more efficiently by performing simulation and evaluation on a performance overhead required by the backbone network in the target model under different candidate partitioning policies, so that the K to-be-verified partitioning policies may be more properly selected from the N candidate partitioning policies, thereby improving the reasonableness of the finally selected target partitioning policy.

It should be noted that some procedures described in the foregoing embodiments and accompanying drawings include a plurality of operations that appear in a specific sequence. However, it should be clearly understood that these operations need not be performed in the sequence in which the operations appear in this specification and may be performed in parallel. Sequence numbers of the operations, such as 301 and 302, are merely used for distinguishing different operations, and do not indicate any performing sequence. In addition, the procedures may include more or fewer operations, and the operations may be performed in sequence or in parallel. It should be noted that descriptions of "first", "second" and the like in this specification are used for distinguishing different candidate partitioning policies and the like, do not indicate a sequence, and do not limit that "first" and "second" are of different types.

FIG. 5 is a schematic structural diagram of a computing device according to another embodiment of this disclosure. As shown in FIG 5, the computing device includes: a memory 50, a processor 51, and a communication component 52.

The processor 51 is coupled to the memory 50 and the communication component 52, and is configured to execute a computer program in the memory 50, to perform filtering on partitioning parameters corresponding to a target model in each of partitioning dimensions according to a preset filtering rule in the corresponding partition dimension; combine the partitioning parameters, remained after the filtering, in the partitioning dimensions to form partitioning policies, and search for candidate partitioning policies meeting a check condition from the formed partitioning policies; and perform performance evaluation on the target model under each of the candidate partitioning policies, to determine a target partitioning policy as a basis for distributed deployment of the target model.

In an optional embodiment, the processor 51 may be further configured to: obtain model parameters corresponding to the target model; query hardware information corresponding to a target cluster, where the target cluster is configured to carry the target model; and generate the partitioning parameters for the target model in each of the partitioning dimensions based on the model parameters and the hardware information.

In an optional embodiment, the partitioning dimensions include a tensor parallel dimension, a partitioning parameter in the tensor parallel dimension uses a tensor parallel size, and the preset filtering rule in the tensor parallel dimension includes at least one of: the tensor parallel size being 1 or an even number greater than 1 and not exceeding a total quantity of GPUs in a target cluster; the tensor parallel size being divisible by a total quantity of attention heads corresponding to the target model; or the tensor parallel size not exceeding a quantity of GPUs installed on a single node in the target cluster, where the target cluster is configured to carry the target model.

In an optional embodiment, the partitioning dimensions include a pipeline parallel dimension, a partitioning parameter in the pipeline parallel dimension uses a pipeline parallel size, and the preset filtering rule in the pipeline parallel dimension includes at least one of: the pipeline parallel size being 1 or an even number greater than 1 and not exceeding a total quantity of GPUs in a target cluster; or the pipeline parallel size being divisible by a total quantity of model layers corresponding to the target model, where the target cluster is configured to carry the target model.

In an optional embodiment, the partitioning dimensions include a data parallel dimension, a partitioning parameter in the data parallel dimension uses a data parallel size, and the preset filtering rule in the data parallel dimension includes: the data parallel size not exceeding a ratio of a total memory capacity of a target cluster to an amount of memory required by the target model; and/or the partitioning dimensions include a batch size dimension, a partitioning parameter in the batch size dimension uses a quantity of samples in a single batch, and the preset filtering rule in the batch size dimension includes: the quantity of samples in a single batch not exceeding an empirical value supported by the target cluster and not exceeding a quantity of samples supported by a remaining memory capacity, and the remaining memory capacity is an estimated amount of memory remained in the target cluster after the target model is deployed on the target cluster, where the target cluster is configured to carry the target model.

In an optional embodiment, each of the candidate partitioning policies includes a tensor parallel size, a pipeline parallel size, a data parallel size, and/or a quantity of samples in a single batch, and when searching for candidate partitioning policies meeting a check condition, the processor 51 may be configured to: determine that the check condition is met in response to a product of the tensor parallel size, the pipeline parallel size, and the data parallel size included in the candidate partitioning policy being equal to a total quantity of GPUs provided by a target cluster; and/or determining that the check condition is met in response to the data parallel size included in the candidate partitioning policy being divisible by the quantity of samples in the single batch, where the target cluster is configured to carry the target model.

In an optional embodiment, in response to N candidate partitioning policies N, when performing performance evaluation on the target model under each of the candidate partitioning policies, to determine the target partitioning policy, the processor 51 may be configured to: compute, under each of the N candidate partitioning policies, a simulated evaluation result corresponding to the target model on the target cluster; select K to-be-verified partitioning policies in the N candidate partitioning policies according to a simulated evaluation results, where K<N; perform distributed deployment of the target model on the target cluster according to the K to-be-verified partitioning policies, to generate real-machine evaluation results; and determine the target partitioning policy in the K to-be-verified partitioning policies according to the real-machine evaluation results.

In an optional embodiment, when computing, under each of the N candidate partitioning policies, the simulated evaluation result corresponding to the target model on the target cluster, the processor 51 may be configured to: simulate and evaluate a performance overhead corresponding to a backbone network of the target model on the target cluster under a first candidate partitioning policy as a simulated evaluation result corresponding to the target model under the first candidate partitioning policy, where the performance overhead includes a computing overhead, a communication overhead, and/or a memory overhead, and the first candidate partitioning policy is any one of the candidate partitioning policies.

In an optional embodiment, when simulating and evaluating the performance overhead corresponding to the backbone network of the target model on the target cluster, the processor 51 may be configured to: simulate and evaluate a unit performance overhead corresponding to a target process by using a unit sample received by a single model layer carried on the target process as a simulation and evaluation unit, where the target process is any process among simulated processes on the target cluster for carrying the target model; determine a simulation and evaluation coefficient corresponding to the target process according to partitioning parameters in the first candidate partitioning policy; computing a product of the simulation and evaluation coefficient and the unit performance overhead as a performance overhead corresponding to the target process; and estimate a performance overhead corresponding to the backbone network according to the performance overheads computed for the processes configured to carry the backbone network.

In an optional embodiment, when simulating and evaluating the unit performance overhead corresponding to the target process, the processor 51 may be configured to: simulate and evaluate, for an inference stage, a performance overhead corresponding to the unit sample in a single round of end-to-end propagation as a unit performance overhead corresponding to the target process; and simulate and evaluate, for a training stage, a total performance overhead corresponding to the unit sample in a plurality of rounds of end-to-end propagation required for training and other training-required links as the unit performance overhead corresponding to the target process.

In an optional embodiment, when estimating the performance overhead corresponding to the backbone network according to the performance overhead computed for the processes configured to carry the backbone network, the processor 51 may be configured to: select a representative process according to time consumption included in a performance overheads corresponding to the processes; and use the performance overhead corresponding to the representative process as the performance overhead corresponding to the backbone network.

In an optional embodiment, when selecting K to-be-verified partitioning policies in the N candidate partitioning policies according to the simulated evaluation result, the processor 51 may be configured to: filter out, in the N candidate partitioning policies according to memory overheads in the simulated evaluation results, a candidate partitioning policy estimated to have a memory overflow problem; compute, based on the simulated evaluation results, evaluation indexes respectively corresponding to remaining candidate partitioning policies; and sort the remaining candidate partitioning policies according to the evaluation indexes, to select the K to-be-verified partitioning policies, where the evaluation index includes a sampling rate.

In an optional embodiment, when performing distributed deployment of the target model on the target cluster according to the K to-be-verified partitioning policies, to generate the real-machine evaluation results, the processor 51 may be configured to: invoke a model execution framework, and input partitioning parameters in each of the K to-be-verified partitioning policies into the model execution framework; perform a respective distributed deployment of the target model on the target cluster according to each of the K to-be-verified partitioning policies by using the model execution framework; and perform a real-machine evaluation operation under each of the K to-be-verified partitioning policies, to generate the real-machine evaluation results.

In an optional embodiment, the processor 51 may be further configured to: extract, from the invoked model execution framework, a configuration file generated when performing the distributed deployment of the target model on the target cluster according to the target partitioning policy; and save the configuration file.

Further, as shown in FIG. 5, the computing device further includes another component, for example, a power supply component 53. Only some components are schematically provided in FIG. 5, which does not mean that the computing device includes only the components shown in FIG. 5.

It should be noted that for technical details of the foregoing embodiments related to the computing device, reference may be made to relevant descriptions in the foregoing method embodiments. To reduce space, details are not described herein again, but this should not cause a loss to the protection scope of this disclosure.

Correspondingly, an embodiment of this disclosure further provides a computer-readable storage medium storing a computer program. When the computer program is executed, the steps performed in the foregoing method embodiments can be implemented.

The memory in FIG. 5 is configured to store the computer program, and may be configured to store various other data to support an operation on a computing platform. Examples of the data include instructions, contact data, phonebook data, a message, a picture, a video, and the like of any application program or method used for operating on the computing platform. The memory may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disc.

The communication component in FIG. 5 is configured to facilitate communication in a wired or wireless manner between a device at which the communication component is located and another device. The device at which the communication component is located may access a wireless network based on a communication standard, such as a mobile communication network such as WiFi, 2G, 3G, 4G/LTE, or 5G, or a combination thereof. In an exemplary embodiment, the communication component receives a broadcast signal or broadcast related information from an external broadcast management system through a broadcast channel. In an exemplary embodiment, the communication component further includes a near field communication (NFC) module, to facilitate short range communication. For example, the NFC module may be implemented based on a radio frequency identification (RFID) technology, an infrared data association (IrDA) technology, an ultra-wideband (UWB) technology, a Bluetooth (BT) technology, and another technology.

The power supply component in FIG. 5 provides power to various components of a device in which the power supply component is located. The power supply component may include a power supply management system, one or more power supplies, and another component associated with generating, managing, and allocating power for the device in which the power supply component is located.

A person skilled in the art should understand that the embodiments of this disclosure may be provided as a method, a system, or a computer program product. Therefore, this disclosure may use a form of a hardware-only embodiment, a software-only embodiment, or an embodiment combining software and hardware. In addition, this disclosure may use a form of a computer program product implemented on one or more computer-available storage media (including but not limited to a disk memory, a CD-ROM, an optical memory, and the like) that include computer-available program code.

This disclosure is described with reference to the flowchart and/or the block diagram of the method, the device (system), and the computer program product according to the embodiments of this disclosure. It should be understood that each process and/or each block of the flowchart and/or the block diagram, as well as a combination of the process and/or the block of the flowchart and/or the block diagram may be implemented by the computer program instructions. These computer program instructions may be provided for a general-purpose computer, a dedicated computer, an embedded processor, or a processor of another programmable data processing device to generate a machine, so that the instructions executed by the computer or the processor of another programmable data processing device generate an apparatus for implementing a specific function in one or more processes in the flowchart and/or in one or more blocks in the block diagram.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in the one or more processes in the flowchart and/or in the one or more blocks in the block diagram.

These computer program instructions may alternatively be loaded onto the computer or another programmable data processing device, so that a series of operations and steps are performed on the computer or the other programmable device, thereby generating computerimplemented processing. Therefore, the instructions executed on the computer or the other programmable device provide steps for implementing a specific function in the one or more processes in the flowchart and/or in the one or more blocks in the block diagram.

It should be further noted that terms "include", "comprise", and any variants thereof are intended to cover a non-exclusive inclusion. Therefore, in the context of a process, a method, a product, or a device, the inclusion of a series of elements includes not only those elements but also another element not explicitly listed, or elements inherent to such a process, a method, a product, or a device. Unless otherwise specified, an element limited by "include a/an..." or "comprise a/an" does not exclude another same element existing in the process, the method, the product, or the device that includes the element.

It should be noted that user information (including, but not limited to, user equipment information, user personal information, and the like) and data (including, but not limited to, data for analysis, stored data, displayed data, and the like) involved in this disclosure are information and data that are authorized by a user or that are sufficiently authorized by all parties, and related data needs to be collected, used, and processed by complying with related laws, regulations, and standards of related countries and regions, and a corresponding operation entry is provided for a user to select to authorize or reject.

The foregoing descriptions are merely the embodiments of this disclosure, but are not intended to limit this disclosure. A person skilled in the art may make various modifications and variations to this disclosure. Any modification, equivalent replacement, improvement, or the like made without departing from the spirit and the principle of this disclosure shall fall within the protection scope of this disclosure.

## Claims

1. A model partitioning method, comprising:
performing filtering on partitioning parameters corresponding to a target model in each of partitioning dimensions according to a preset filtering rule in the corresponding partition dimension;
combining the partitioning parameters, remained after the filtering, in the partitioning dimensions to form partitioning policies, and searching for candidate partitioning policies meeting a check condition from the formed partitioning policies; and
performing performance evaluation on the target model under each of the candidate partitioning policies, to determine a target partitioning policy as a basis for distributed deployment of the target model.

2. The method according to claim 1, further comprising:
obtaining model parameters corresponding to the target model;
querying hardware information corresponding to a target cluster, wherein the target cluster is configured to carry the target model; and
generating the partitioning parameters for the target model in each of the partitioning dimensions based on the model parameters and the hardware information.

3. The method according to claim 1 or 2, wherein the partitioning dimensions comprise a tensor parallel dimension, a partitioning parameter in the tensor parallel dimension uses a tensor parallel size, and the preset filtering rule in the tensor parallel dimension comprises at least one of:
the tensor parallel size being 1 or an even number greater than 1 and not exceeding a total quantity of GPUs in a target cluster;
the tensor parallel size being divisible by a total quantity of attention heads corresponding to the target model; or
the tensor parallel size not exceeding a quantity of GPUs installed on a single node in the target cluster;
wherein the target cluster is configured to carry the target model.

4. The method according to claim 1 or 2, wherein the partitioning dimensions comprise a pipeline parallel dimension, a partitioning parameter in the pipeline parallel dimension uses a pipeline parallel size, and the preset filtering rule in the pipeline parallel dimension comprises at least one of:
the pipeline parallel size being 1 or an even number greater than 1 and not exceeding a total quantity of GPUs in a target cluster; or
the pipeline parallel size being divisible by a total quantity of model layers corresponding to the target model;
wherein the target cluster is configured to carry the target model.

5. The method according to claim 1 or 2, wherein the partitioning dimensions comprise a data parallel dimension, a partitioning parameter in the data parallel dimension uses a data parallel size, and the preset filtering rule in the data parallel dimension comprises: the data parallel size not exceeding a ratio of a total memory capacity of a target cluster to an amount of memory required by the target model; and/or
the partitioning dimensions comprise a batch size dimension, a partitioning parameter in the batch size dimension uses a quantity of samples in a single batch, and the preset filtering rule in the batch size dimension comprises: the quantity of samples in a single batch not exceeding an empirical value supported by the target cluster and not exceeding a quantity of samples supported by a remaining memory capacity, wherein the remaining memory capacity is an estimated amount of memory remained in the target cluster after the target model is deployed to the target cluster;
wherein the target cluster is configured to carry the target model.

6. The method according to claim 1 or 2, wherein each of the candidate partitioning policies comprises a tensor parallel size, a pipeline parallel size, a data parallel size, and/or a quantity of samples in a single batch; and the searching for candidate partitioning policies meeting a check condition comprises:
determining that the check condition is met in response to a product of the tensor parallel size, the pipeline parallel size, and the data parallel size comprised in the candidate partitioning policy being equal to a total quantity of GPUs provided by a target cluster; and/or
determining that the check condition is met in response to the data parallel size comprised in the candidate partitioning policy being divisible by the quantity of samples in the single batch;
wherein the target cluster is configured to carry the target model.

7. The method according to claim 2, wherein in response to N candidate partitioning policies being provided, the performing performance evaluation on the target model under each of the candidate partitioning policies, to determine the target partitioning policy comprises:
computing, under each of the N candidate partitioning policies, a simulated evaluation result corresponding to the target model on the target cluster;
selecting K to-be-verified partitioning policies in the N candidate partitioning policies according to the simulated evaluation results, wherein K<N;
performing distributed deployment of the target model on the target cluster according to the K to-be-verified partitioning policies, to generate real-machine evaluation results; and
determining the target partitioning policy in the K to-be-verified partitioning policies according to the real-machine evaluation results.

8. The method according to claim 7, wherein the computing, under each of the N candidate partitioning policies, the simulated evaluation result corresponding to the target model on the target cluster comprises:
simulating and evaluating a performance overhead corresponding to a backbone network of the target model on the target cluster under a first candidate partitioning policy as a simulated evaluation result corresponding to the target model under the first candidate partitioning policy;
wherein the performance overhead comprises a computing overhead, a communication overhead, and/or a memory overhead, and the first candidate partitioning policy is any one of the candidate partitioning policies.

9. The method according to claim 8, wherein the simulating and evaluating the performance overhead corresponding to the backbone network of the target model on the target cluster comprises:
simulating and evaluating a unit performance overhead corresponding to a target process by using a unit sample received by a single model layer carried on the target process as a simulation and evaluation unit, wherein the target process is any process among simulated processes on the target cluster for carrying the target model;
determining a simulation and evaluation coefficient corresponding to the target process according to partitioning parameters in the first candidate partitioning policy;
computing a product of the simulation and evaluation coefficient and the unit performance overhead as a performance overhead corresponding to the target process; and
estimating the performance overhead corresponding to the backbone network according to the performance overheads computed for processes configured to carry the backbone network.

10. The method according to claim 9, wherein the simulating and evaluating the unit performance overhead corresponding to the target process comprises:
simulating and evaluating, for an inference stage, a performance overhead corresponding to the unit sample in a single round of end-to-end propagation as the unit performance overhead corresponding to the target process; and
simulating and evaluating, for a training stage, a total performance overhead corresponding to the unit sample in a plurality of rounds of end-to-end propagation required for training and other training-required links as the unit performance overhead corresponding to the target process.

11. The method according to claim 9, wherein the estimating the performance overhead corresponding to the backbone network according to the performance overheads computed for the processes configured to carry the backbone network comprises:
selecting a representative process according to time consumption comprised in the performance overheads corresponding to the processes; and
using the performance overhead corresponding to the representative process as the performance overhead corresponding to the backbone network.

12. The method according to claim 7, wherein the selecting K to-be-verified partitioning policies in the N candidate partitioning policies according to the simulated evaluation results comprises:
filtering out, in the N candidate partitioning policies according to memory overheads in the simulated evaluation results, a candidate partitioning policy estimated to have a memory overflow problem;
computing, based on the simulated evaluation results, evaluation indexes respectively corresponding to remaining candidate partitioning policies; and
sorting the remaining candidate partitioning policies according to the evaluation indexes, to select the K to-be-verified partitioning policies;
wherein the evaluation index comprises a sampling rate.

13. The method according to claim 7, wherein the performing distributed deployment of the target model on the target cluster according to the K to-be-verified partitioning policies, to generate the real-machine evaluation results comprises:
invoking a model execution framework, and inputting partitioning parameters in each of the K to-be-verified partitioning policies into the model execution framework;
performing a respective distributed deployment of the target model on the target cluster according to each of the K to-be-verified partitioning policies by using the model execution framework; and
performing a real-machine evaluation operation under each of the K to-be-verified partitioning policies, to generate the real-machine evaluation results.

14. The method according to claim 13, further comprising:
extracting, from the invoked model execution framework, a configuration file generated when performing the distributed deployment of the target model on the target cluster according to the target partitioning policy; and
saving the configuration file.

15. A computing device, comprising a memory, a processor, and a communication component, wherein
the memory is configured to store one or more computer instructions; and
the processor is coupled to the memory and the communication component, and is configured to execute the one or more computer instructions, to perform the model partitioning method according to any one of claims 1 to 14.

16. A computer-readable storage medium, storing computer instructions, wherein the computer instructions, when executed by one or more processors, cause the one or more processors to perform the model partitioning method according to any one of claims 1 to 14.
